# EUROPÄISCHE PATENTSCHRIFT

(11) **EP 1 604 548 B1**
(45) Veröffentlichungstag und Bekanntmachung des Hinweises auf die Patenterteilung: **04.10.2006**
(21) Anmeldenummer: 04716600.4
(22) Anmeldetag: 03.03.2004
(51) Int. Cl.: H05B 3/34, G05D 23/24

(54) **HEIZGERÄT MIT EINEM SCHMIEGSAMEN WÄRMETEIL**
HEATING DEVICE COMPRISING A FLEXIBLE HEATING PART
APPAREIL CHAUFFANT PRESENTANT UNE PARTIE SOUPLE DEGAGEANT DE LA CHALEUR

(30) Priorität: 10.03.2003 DE 10310275
(43) Veröffentlichungstag der Anmeldung: 14.12.2005
(73) Patentinhaber: Beurer GmbH & Co., 89077 Ulm (DE)
(72) Erfinder: MERK, Ernst, 89264 Weissenhorn (DE); GINGL, Hans-Georg, 89143 Blaubeuren (DE); KÖHLER, Ralf, 89129 Langenau (DE); GERRARD, Grahame, Hilldale, Parbold, Lancs WN8 7AW (GB)
(74) Vertreter: Fleck, Hermann-Joseph
(86) Internationale Anmeldenummer: PCT/EP2004/002102
(87) Internationale Veröffentlichungsnummer: WO 2004/082334

(56) Entgegenhaltungen:
- EP-A- 0 910 227
- DE-A- 4 019 698
- DE-A- 10 126 066
- US-A- 4 656 334
- US-A- 5 105 067

## Beschreibung

Die Erfindung bezieht sich auf ein Heizgerät mit einem schmiegsamen Wärmeteil und einer Steuervorrichtung für die Temperaturregulierung und Funktionsüberwachung, die eine Sollwertbereitstellungsschaltung, eine Istwertrückführschaltung, einen Soll-/Istwertvergleicher und eine Ansteuerstufe mit einem in einem Heizsteuerkreis liegenden Steuerglied für einen durch den Wärmeteil fließenden Heizstrom aufweist.

Ein Heizgerät dieser Art ist in der DE 40 19 698 A als bekannt ausgewiesen. Bei diesem bekannten Heizgerät ist in einem schmiegsamen Wärmeteil ein von einem Heizstrom durchflossenes Heizelement eingebettet, wobei der Heizstrom über eine Steuervorrichtung für die Temperaturregulierung und Funktionsüberwachung geregelt wird. Ein Temperatursollwert wird von einem an der Versorgungsspannung liegenden, einstellbaren Spannungsteiler vorgegeben. Zur Ermittlung eines Temperatur-Istwertes ist vorgesehen, dass das Heizelement zwei Heizleiter mit unterschiedlichem Temperaturkoeffizienten aufweist und sich das Spannungspotential an dem gemeinsamen Verbindungspunkt beider Heizleiter gegenüber den Versorgungsspannungsanschlüssen in Abhängigkeit von der Temperatur verschiebt. Auch weist die Temperaturregeleinrichtung einen Soll-/Istwertvergleicher für die Regelung des in dem Heizelement des Wärmeteils fließenden Heizstroms auf.

Ein weiteres derartiges Heizgerät mit einem schmiegsamen Wärmeteil, beispielsweise einer Wärmedecke, einem Wärmeunterbett oder einem Heizkissen, ist in der EP 0 562 850 A2 angegeben. Hierbei ist in dem schmiegsamen Wärmeteil eine Heizkordel mit einem inneren Heizleiter und einem davon elektrisch mittels einer Isolation getrennten, konzentrisch aufgewickelten äußeren Heizleiter angeordnet, wobei die von einer Zuführleitung abgelegenen Enden der beiden Heizleiter bzw. Heizdrähte über eine Diode miteinander verbunden sind, über die eine Halbwelle der Wechselversorgungsspannung gesperrt wird. Die Isolation kann dabei einen Widerstand mit negativem Temperaturgang (NTC-Widerstand) aufweisen, während die Heizdrähte z.B. einen Widerstand mit positivem Temperaturgang (PTC-Widerstand) besitzen können. Der durch einen Heizkreis fließende Heizstrom ist mittels eines in dem Heizkreis liegenden Steuerglieds in Form eines Thyristors steuerbar bzw. regelbar, wobei die Ansteuerung über einen Steuerkreis mit einer Ansteuerstufe erfolgt. Bei diesem bekannten Heizgerät ist eine Sicherheitsschaltung mit in dem Heizkreis, und zwar in einem Parallelzweig zu einem das Steuerglied aufweisenden Steuerzweig liegender Gleichrichteranordnung und Temperatursicherung vorgesehen, wobei die Gleichrichteranordnung bezüglich der Diode zwischen den Enden der Heizdrähte in Sperrrichtung geschaltet und die Temperatursicherung mittels Widerständen in thermischer Kopplung mit einem Sicherungselement gebildet ist und ausgelöst wird, wenn durch einen Kurzschluss der Heizdrähte die im Normalbetrieb gesperrte Halbwelle durch die Gleichrichteranordnung der Sicherheitsschaltung fließt und die Widerstände aufheizt. Das Steuerglied in Form des Thyristors kann durch Variieren des Phasenwinkels in Abhängigkeit von der gewünschten Temperatur des schmiegsamen Wärmeteils angesteuert werden. Maßnahmen, die eine genauere Regelung hinsichtlich Komfort- und Sicherheitsgesichtspunkten zulassen, sind nicht angegeben und mit einer derartigen Regelung schwer erreichbar.

Der Erfindung liegt die Aufgabe zugrunde, ein Heizgerät der eingangs genannten Art bereit zu stellen, mit dem sich die Temperatur nach dem Wunsch eines Benutzers leicht und zuverlässig regulieren lässt.

Diese Aufgabe wird mit den Merkmalen des Anspruches 1 gelöst. Hiernach ist vorgesehen, dass ein zu der Sollwertbereitstellungsschaltung führender Überwachungszweig zum Bilden von Überwachungszweigsignalen vorhanden ist, die der Sollwertbereitstellungsschaltung zur Überlagerung von dieser gebildeter primärer Sollwertsignale und Bildung von an den Soll-/Istwertvergleicher geleiteten Sollwertsignalen über eine Überwachungszweigankopplung zugeführt werden.

Mit diesen Maßnahmen wird ein von einem Benutzer aufgrund einer gewünschten Temperatur oder eines gewünschten Temperaturverlaufes gewählter Sollwert automatisch hinsichtlich Sicherheitsgesichtspunkten überwacht und ist diesen gemäß beeinflussbar.

Ein günstiger Aufbau besteht dabei darin, dass die Sollwertbereitstellungsschaltung eine Sollwertbildungsstufe und einen Sollwertzuführungspfad aufweist und dass die Überwachungszweigankopplung an den Sollwertzuführpfad angeschlossen ist.

Verschiedene vorteilhafte Ausgestaltungsmöglichkeiten bestehen dabei darin, dass der Überwachungszweig zur Bildung der Überwachungszweigsignale eine Überwachungsschaltung und/oder eine Zeitgeberschaltung aufweist.

Sind eine Überwachungsschaltung und eine Zeitgeberschaltung kombiniert vorgesehen, so werden die Signale durch die Maßnahmen eindeutig zugeführt, dass die Ausgänge der Überwachungsschaltung und der Zeitgeberschaltung mittels zugeordneter Entkopplungselemente voneinander entkoppelt sind und dass zwischen einer Anschlussstelle der Überwachungszweigankopplung an den Sollwertzuführpfad und der Sollwertbereitstellungsschaltung ein weiteres Entkopplungselement zwischengeschaltet ist.

Verschiedene vorteilhafte Sicherheitsmaßnahmen bestehen darin, dass die Überwachungsschaltung eine Überwachungseinheit zur Überwachung der Innentemperatur eines in einer Versorgungsleitung des Wärmeteils liegenden Schnurzwischenschalters oder eine Isolationszustandsüberwachungseinheit für eine zwischen zwei Heizleitern des Wärmeteils befindliche Isolation oder eine Kombination aus beiden aufweist.

Zu einem günstigen Aufbau trägt bei, dass die Sollwertbildungsstufe Einstellmittel zur manuellen Sollwertwahl aufweist.

Ist vorgesehen, dass der Istwert mittels eines in dem Heizsteuerkreis liegenden Messglieds abgegriffen ist und dass die lstwertrückführschaltung zur lstwertaufbereitung einen Verstärker aufweist, ergibt sich eine eindeutige Zuführung des Istwertes.

Zum Erreichen eindeutiger Regelungsvorgänge sind weiterhin die Maßnahmen vorteilhaft, dass an der Ansteuerstufe zwischen einem Ausgang des Soll-/Istwert-Vergleichers und dem Steuerglied eine Impulsgeneratorschaltung angeschlossen ist, deren Ausgangssignal einem Eingang des Soll-/Istwert-Vergleichers zum Retriggern eines Messzyklus nach Abschalten des Steuergliedes zugeführt ist, sowie weiterhin, dass das Ausgangssignal der Impulsgeneratorschaltung dem an den Soll-/Istwert-Vergleicher geführten Istwert aufgeschaltet ist und dass ein mit dem Anschluss der lmpulsgeneratorschaltung an der Ansteuerstufe abgegriffenes Signal über ein Triggerelement der Sollwertbildungsstufe zum Beaufschlagen des Sollwertes zugeführt ist.

Zu einer zuverlässigen Überwachung trägt weiterhin bei, dass die Isolation einen Widerstand mit negativem Temperaturgang aufweist und dass die Isolationsüberwachungseinheit im Heizsteuerkreis an einem Parallelzweig angeschlossen ist, der zu einem das Steuerglied aufweisenden Steuerzweig parallel geschaltet ist.

Hierbei besteht eine vorteilhafte Ausgestaltung darin, dass die durch die Isolation elektrisch voneinander getrennten, als Heizdrähte ausgebildeten Heizleiter an ihrem von einem Versorgungsanschluss abgekehrten Ende über eine Gleichrichterschaltung miteinander verbunden sind und dass der Parallelzweig mindestens einen Sicherheitsschaltungs-Gleichrichter aufweist, der bezüglich der Gleichrichterschaltung in Reihe liegt und in Sperrrichtung geschaltet ist.

Die Sicherheit des Heizgerätes wird des Weiteren dadurch unterstützt, dass der Parallelzweig eine Temperatursicherung und mindestens einen mit dieser thermisch gekoppelten Sicherheitsschaltungswiderstand aufweist, der bei einem durch die Isolation fließenden übermäßigen Strom, insbesondere auch Kurzschlussstrom, aufgeheizt wird und die Temperatursicherung auslöst.

Die Erfindung wird nachfolgend anhand von Ausführungsbeispielen unter Bezugnahme auf die Zeichnungen näher erläutert. Es zeigen:
- Fig. 1: ein schematisches Blockschaltbild für eine Steuervorrichtung eines Heizgerätes,
- Fig. 2: ein Ausführungsbeispiel für einen Schaltungsaufbau der Steuervorrichtung,
- Fig. 3: eine weitere Blockdarstellung für ein Ausführungsbeispiel der Steuervorrichtung und
- Fig. 4: ein weiteres Ausführungsbeispiel für die Steuervorrichtung in Blockdarstellung.

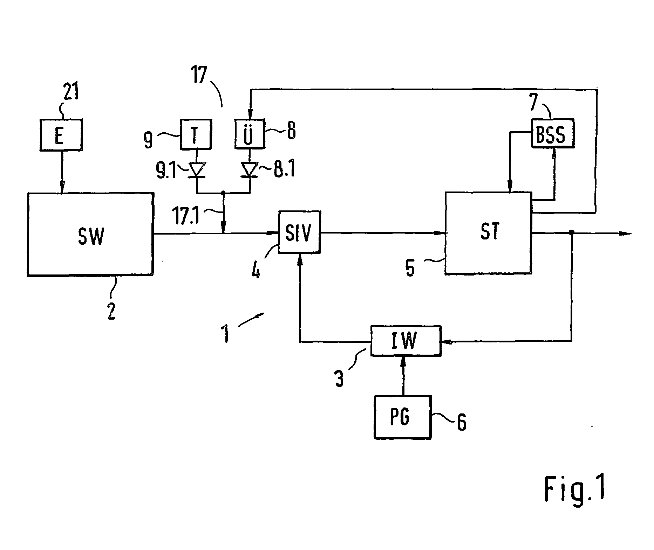

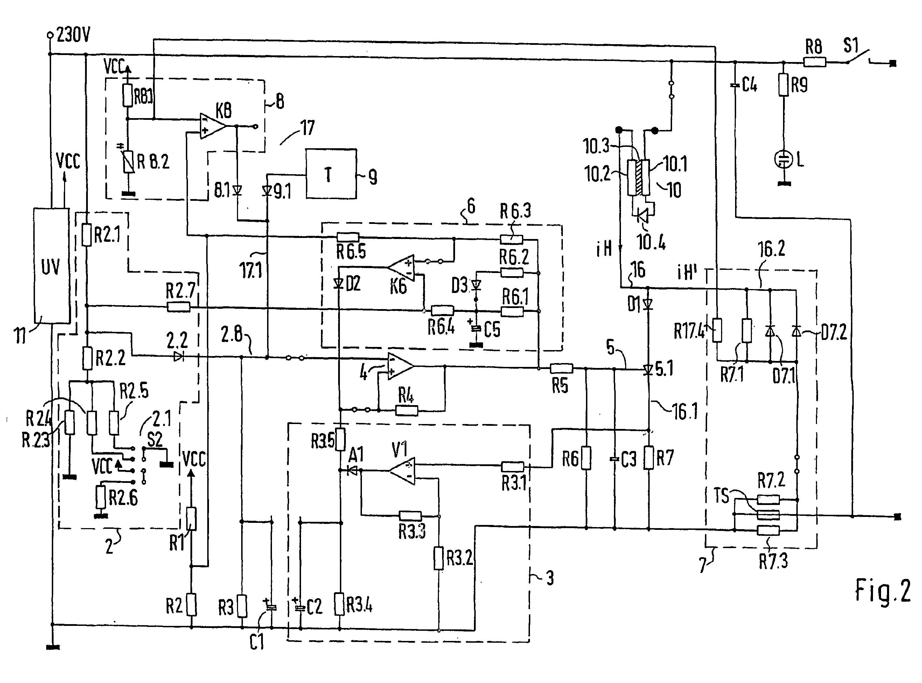

Ein Heizgerät mit einem schmiegsamen Wärmeteil 10 (vgl. Fig. 2), beispielsweise einer Heizdecke, einem Wärmeunterbett oder einem Heizkissen, mit darin mäanderförmig angeordneter Heizkordel weist zur Temperaturregelung und Funktionsüberwachung eine Steuervorrichtung 1 auf, wie sie in Fig. 1 als Ausführungsbeispiel schematisch in einem Blockschaltbild dargestellt ist. Ein für die Temperatur repräsentativer Istwert, beispielsweise ein durch die Heizkordel fließender Heizstrom oder eine daraus gebildete Heizspannung, der in einem Heizsteuerkreis 16 abgegriffen ist, wird über eine Istwert-Rückführschaltung 3 zu einem Eingang eines Soll-/Istwert-Vergleichers 4 zum Vergleichen mit einem Sollwert zurückgeführt. Die Rückführung des Istwertes oder der Soll-/Istwert-Vergleichsvorgang kann dabei mittels einer Impulsgeneratorschaltung 6 in geeigneter Weise getriggert werden. Der einem weiteren Eingang des Soll-/Istwert-Vergleichers 4 zugeführte Sollwert ergibt sich aus einem primären Sollwert, der in einer Sollwertbildungsstufe 2 in Abhängigkeit einer über Einstellmittel 2.1 vorgenommenen manuellen Vorgabe erzeugt wird, wobei der vorgegebene primäre Sollwert von mindestens einem in einem Überwachungszweig 17 gebildeten und über eine Überwachungszweigankopplung 17.1 zugeführten Überwachungszweigsignal überlagerbar ist. Das Ausgangssignal des Soll-/Istwert-Vergleichers 4 ist einer Ansteuerstufe 5 mit einem Steuerglied 5.1 zum Steuern des Heizstromes iH zugeführt. In dem Überwachungszweig 17 sind zum Bilden des Überwachungszweigsignals beispielsweise eine Zeitgeberschaltung 9 und/oder eine Überwachungsschaltung 8 angeordnet, deren Ausgangssignale jeweils über mindestens ein Gleichrichterelement, vorliegend ausgebildet als Koppeldioden 8.1, 9.1 über die Überwachungszweigankopplung 17.1 dem primär gebildeten Sollwert aufgeschaltet werden. Die Überwachungsschaltung 8 bildet ein Überwachungssignal beispielsweise aus einer in dem Steuerkreis 16 abgegriffenen Überwachungsgröße, die z.B. ebenfalls aus dem Heizstrom iH gewonnen werden kann. Alternativ oder zusätzlich kann ein Überwachungssignal z.B. eine Information beinhalten, die eine Temperaturerhöhung in einem Schnurzwischenschalter S1 angibt, der in einer Versorgungsstromleitung liegt. Ferner ist eine Sicherheitsschaltung 7 vorgesehen, mit der eine Abschaltung des Heizgerätes vorgenommen werden kann, wenn in dem Wärmeteil ein gefährlicher Fehlerzustand, insbesondere ein Kurzschluss in der Heizkordel auftritt.

Fig. 2 zeigt ein Ausführungsbeispiel, wie die in Fig. 1 gezeigten Funktionsblöcke im Einzelnen aufgebaut und miteinander verschaltet sein können. Von links nach rechts sind im Einzelnen folgende Funktionsblöcke dargestellt: eine elektrische Energieversorgung 11 mit Gleichspannungsbildung von z.B. 12 V, die einerseits über einen Sicherungswiderstand R8 an einer Phase einer Netzspannung und andererseits an dem Nullleiter der Netzspannung angeschlossen ist; die Sollwertbildungsstufe 2 mit einem Einstellmittel 2.1 in Form eines Temperaturstufenumschalters S2 für mehrere Temperaturstufen; die Überwachungsschaltung 8 mit Innentemperaturüberwachung für einen Schnurzwischenschalter, Pultgehäuse, Steckergehäuse oder dgl. und einer Isolationszustandsüberwachungseinheit für eine zwischen Heizleitern 10.1, 10.2 in Form von Heizdrähten angeordneten Isolation 10.3; die Zeitgeberschaltung 9; die lmpulsgeneratorschaltung 6 für eine Retriggerung eines Messzyklus nach dem Ausschalten des Steuergliedes 5.1 bzw. elektronischen Lastschalters, insbesondere in Form eines Thyristors; die Istwertrückführschaltung 3; die Soll-/Istwert-Vergleicher 4 für die Temperaturregelung; der schmiegsame Wärmeteil 10 mit der die zwei Heizdrähte 10.1, 10.2 und die Isolation 10.3 beinhaltenden Heizkordel, die an Anschlusspunkten E und F zweipolig an ein Versorgungskabel angeschlossen sind; die Ansteuerstufe 5 mit dem Steuerglied 5.1 für den Heizstrom iH; eine Betriebsanzeigenschaltung mit einer Anzeigelampe L und einem Anzeigewiderstand R9; die Sicherheitsschaltung mit einem ersten und zweiten Sicherheitsschaltungswiderstand R7.1, R7.2 und einer mit diesen thermisch gekoppelten Temperatursicherung TS und Gleichrichterschaltung mit zwei Sicherheitsschaltungsdioden D7.1, D7.2 zum Erfassen eines fehlerhaften Zustandes in der Heizkordel und einen Netzspannungsschalter S1 des Schnurzwischenschalters zum manuellen Ein- und Ausschalten des Heizgerätes.

Die Sollwertbildungsstufe 2 ist einerseits über einen ersten Sollwertwiderstand R2.1 an die Phase der Netzspannung gelegt und andererseits über einen zweiten Sollwertwiderstand R2.2 und einen mit diesem in Reihe liegenden dritten Sollwertwiderstand R2.3 nach Masse geführt. Dem dritten Sollwertwiderstand R2.3 können über den Temperaturstufenumschalter S2 verschiedene Widerstände, nämlich ein vierter Sollwertwiderstand R2.4, ein fünfter Sollwertwiderstand R2.5 parallel geschaltet werden, wobei diesen letzteren auch noch ein sechster Sollwertwiderstand R2.6 in Reihe geschaltet werden kann und auch eine Anschaltmöglichkeit an die Gleichspannung VCC oder Masse besteht, so dass sich mehrere Einstellmöglichkeiten für die Temperatur ergeben. Dabei bildet der Widerstand R2.6 einen Entladewiderstand, der in einer 0-Stellung dafür sorgt, dass die Gleichspannung VCC von z.B. 12V möglichst rasch entladen wird und z.B. die Zeitgeberschaltung 9 nach einem Zeitablauf sofort wieder neu starten kann (Reset-Funktion). Der eingestellte primäre Sollwert wird zwischen dem ersten und zweiten Sollwertwiderstand R2.1, R2.2 über einen Gleichrichter 2.2 für eine Spitzenwertgleichrichtung abgegriffen, wobei der Gleichrichter als Diode ausgebildet und mit seiner Anode zwischen den beiden Sollwertwiderständen R2.1 und R2.2 und mit seiner Kathode an einen negierenden Eingang des einen Operationsverstärker aufweisenden Soll-/Istwert-Vergleichers 4 angeschlossen ist. Des Weiteren ist der Anschlusspunkt zwischen dem ersten und zweiten Sollwertwiderstand R2.1, R2.2 über einen Triggerwiderstand R2.7 zur Nullspannungstriggerung und Vermeidung von EMV-Problemen an einen Schaltungsteil der Impulsgeneratorschaltung 6 gelegt. Zwischen der Kathode des Gleichrichters 2.2 und dem betreffenden Eingang des Soll-/Istwert-Vergleichers 4 ist eine Verbindung nach Masse über eine Parallelschaltung aus einem weiteren Sollwertschaltungswiderstand R3 und einem Sollwertschaltungskondensator C1 hergestellt, so dass Spannungsspitzen in dem Sollwertzuführpfad 2.8 unterdrückt werden.

Die lstwertrückführschaltung 3 weist einen Abgriff eines primären Istwertes in dem Heizkreis 16, und zwar einem Steuerzweig 16.1 desselben zwischen dem Steuerglied 5.1 und einem Messwiderstand R7 auf, der mit seinem anderen Anschluss an Masse liegt. Der an dem Messwiderstand R7 durch den Heizstrom iH gebildete Spannungswert wird über einen ersten Istwertwiderstand R3.1 einem positiven Eingang eines als Operationsverstärker ausgebildeten Verstärkungselements eines Verstärkers V1 zugeführt. Der negierende Eingang des Verstärkungselementes liegt über einen zweiten Istwertwiderstand R3.2 an Masse und ist mit einem dritten Istwertwiderstand R3.3 zur Gegenkopplung mit seinem Ausgang verbunden. Der Ausgang des Verstärkers V1 ist an die Anode einer Ausgangsdiode A1 angeschlossen, die mit ihrer Kathode über einen fünften Istwertwiderstand R3.5 an den positiven Eingang des Soll-/Istwert-Vergleichers 4 angeschlossen ist und über einen vierten Istwertwiderstand R3.4 sowie einen zu diesem parallel geschalteten Kondensator C2 an Masse gelegt ist, so dass auch Spannungsspitzen des Istwertsignals kompensiert werden.

Der Ausgang des Soll-/Istwert-Vergleichers 4 ist über einen Steuerstufenwiderstand R4 zum Bilden einer Hysterese durch Mitkopplung auf seinen positiven Eingang rückgekoppelt und über einen weiteren Steuerstufenwiderstand R5 einerseits an einen Steueranschluss des Steuergliedes 5.1 und andererseits über eine Parallelschaltung aus einem dritten Steuerstufenwiderstand R6 und einem Steuerstufenkondensator C3 nach Masse geführt.

Die Impulsgeneratorschaltung 6 weist einen z.B. mit einem Operationsverstärker ausgebildeten Impulsgeneratorkomparator K6 auf, dessen negierender Eingang über eine Koppelschaltung an den Ausgang des Soll-/Istwert-Vergleichers 4 angeschlossen ist. Die Koppelschaltung weist zwei zueinander parallel liegende Impulsgeneratorwiderstände R6.1, R6.2 auf, die einerseits an den Ausgang des Soll-/Istwert-Vergleichers 4 angeschlossen und andererseits über eine Impulsgeneratordiode D3 miteinander verbunden und über einen Impulsgeneratorkondensator C5 an Masse gelegt sind. Zwischen der Kathode der Impulsgeneratordiode und dem Impulsgeneratorkondensator C6 ist der negierende Eingang des Impulsgeneratorkomparators K6 über einen weiteren Impulsgeneratorwiderstand R6.4 zwischen diesem und dem oben erwähnten Triggerwiderstand R2.7 angeschlossen. Der positive Eingang des Impulsgeneratorkomparators K6 ist über einen noch weiteren Impulsgeneratorwiderstand R6.3 mit dem Ausgang des Soll-/Istwert-Vergleichers 4 verbunden und außerdem über einen fünften Impulsgeneratorwiderstand R6.5 an die Überwachungsschaltung 8 und an eine Referenzspannung zwischen zwei Referenzspannungswiderständen R1, R2 gelegt, die einerseits an der Gleichspannung VCC und andererseits an Masse liegen.

Der Ausgang des Impulsgeneratorkomparators K6 ist mit der Anode einer weiteren Impulsgeneratordiode D2 verbunden, die mit ihrer Kathode an den positiven Eingang des Soll-/Istwert-Vergleichers 4 angelegt ist, an dem auch der aufbereitete Istwert liegt. Mit der Impulsgeneratorschaltung 6 wird eine Retriggerung des Messzyklus nach dem Ausschalten des elektronischen Lastschalters, beispielsweise Thyristors bzw. Steuerglieds 5.1 erreicht, wobei mittels des Impulsgeneratorkompensators C5 eine Zeitverzögerung bewirkt wird. Der Impulsgenerator wird während des eingeschalteten Lastschalters 5.1 immer in einen statischen Zustand versetzt. Der Strompfad beginnt am Ausgang des Soll-/Istwert-Vergleichers 4 mit z.B. 12V Spannung über den Impulsgeneratorwiderstand R2, führt über die Diode D3, den Kondensator C5, den Widerstand R6.4 zum negativen Eingang des Generatorkomparato K6. Da der Negativeingang gegenüber der Referenzspannung am positiven Eingang höher ist, ist das Ausgangssignal von K6 negativ, also Massepotential. Die Diode D2 zu Istwertzweig sperrt.

Die Überwachungsschaltung 8 weist eine Vergleicherstufe K8 mit einem Operationsverstärker auf, der mit seinem negierenden Eingang zwischen Widerständen R8.1, R8.2 eines Spannungsteilers angeschlossen ist, welcher einerseits an der Gleichspannung VCC und andererseits an Masse liegt, wobei der an Masse liegende Überwachungsschaltungswiderstand R8.2 als Widerstand mit negativem Temperaturgang (NTC-Widerstand) ausgelegt ist und zur Überwachung der Innentemperatur eines Schnurzwischenschaltergehäuses dient. Auch ein anderer Temperatursensor, beispielsweise mit positivem Temperaturgang, ist denkbar. Der positive Eingang der Vergleicherstufe 8 liegt an der mittels der Referenzspannungswiderstände R1, R2 gebildeten Referenzspannung und ist über den genannten fünften Impulsgeneratorwiderstand R6.5 an den positiven Eingang des Impulsgeneratorkomparators K6 angeschlossen. Mittels der Überwachungsschaltung 8 wird eine Temperaturüberwachungsstufe für den Innenraum des in dem Netzanschlusskabel liegenden Schnurzwischenschalters, einem Pultgehäuse oder Steckergehäuse oder dgl. gebildet, um eine Abschaltung des Heizstromes bei zu hoher Temperatur im Gehäuse des Schnurzwischenschalters zu bewirken. Hierzu ist der Ausgang der Vergleicherstufe K8 an die Anode der Koppeldiode 8.1 angeschlossen, deren Kathode über die Überwachungszweigankopplung 17.1 an den Sollwertzuführpfad 2.8 bzw. den negierenden Eingang des Soll-/Istwert-Vergleichers 4 angeschlossen ist, so dass das Sollwertsignal bei Temperaturüberschreitung im Innenraum des Schnurzwischenschalters entsprechend beeinflusst, d.h. vorliegend überhöht wird und eine Abschaltung oder Herabsetzung des Heizstromes veranlasst.

An den negierenden Eingang der Vergleicherstufe K8 ist ferner ein über den Heizsteuerkreis 16, und zwar einen zu dem Steuerzweig 16.1 mit dem Steuerglied 5.1 parallel liegenden Parallelzweig 16.2, eine Heizstromkomponente iH' gelegt, die über eine Parallelschaltung aus einer Diodenanordnung mit zwei parallel geschalteten Sicherheitsschaltungsdioden D7.1, D7.2 und einem ersten Sicherheitsschaltungswiderstand R7.1 abgegriffen und über einen zwischen dieser Parallelschaltung und dem negierenden Eingang der Vergleicherstufe K8 liegenden Überwachungszweigwiderstand R17.4 abgegriffen wird. Die Diodenanordnung D7.1, D7.2 liegt dabei in Reihe zu einer Gleichrichterkomponente 10.4 in Form einer weiteren Diode, die zwischen den von der Versorgungsleitung abliegenden Enden der Heizdrähte 10.1, 10.2 angeschlossen ist, und zwar in Sperrrichtung zu dieser weiteren Diode 10.4. Bei intakter Isolation 10.3 fließt daher nur ein sehr geringer Strom iH' durch den Parallelzweig 16.2, der durch den ersten Sicherheitsschaltungswiderstand R7.1 zugelassen wird und bei Weglassen desselben auch praktisch vollständig unterbunden werden kann. Bei erhöhter Temperatur der Heizkordel nimmt der einen negativen Temperaturgang aufweisende Widerstand der Isolation 10.3 (NTC-Widerstand) ab, so dass ein entsprechend großer Stromanteil iH' entsteht, dessen zum Durchlassstrom durch die Gleichrichterkomponente 10.4 entgegen gesetzter Anteil durch die Diodenanordnung D7.1, D7.2 durchgelassen wird und über den Überwachungszweigwiderstand R17.4 an den negierenden Eingang der Vergleicherstufe K8 gelangt. Bei Überschreiten einer vorgebbaren Schwelle kann damit über die Vergleicherstufe K8 auch ein Signal abgegeben werden, wenn eine überhöhte Temperatur an einer Stelle der Heizkordel bzw. der Isolation 10.3 beispielsweise bei einem Knicken der Heizdecke auftritt. Auch hierdurch wird über die Überwachungszweigankopplung 17.1 der Sollwert beeinflusst, beispielsweise erhöht und der Heizstrom iH über die Ansteuerstufe 5 mit dem Steuerglied 5.1 herabgesetzt oder vollständig abgeschaltet.

Die Sicherheitsschaltung 7 ist auch, wie beispielsweise in der eingangs genannten Druckschrift EP 0 562 850 A2 an sich näher gezeigt, zum irreversiblen Auslösen der Temperatursicherung TS ausgebildet, die mit den z.B. zwei parallel geschalteten Sicherheitsschaltungswiderständen R7.1, R7.2 in thermischem Kontakt stehen und dann mit einem sie ausreichend erhitzenden Strom beaufschlagt werden, wenn ein Kurzschluss in der Isolation 10.3 auftritt und die entsprechende Halbwelle des Heizstromes iH als Komponente iH' von der Diodenanordnung D7.1, D7.2 durchgelassen wird. Dadurch wird eine zusätzliche Sicherheitsschaltung 7 gebildet, mit der der Heizstrom iH abgeschaltet wird.

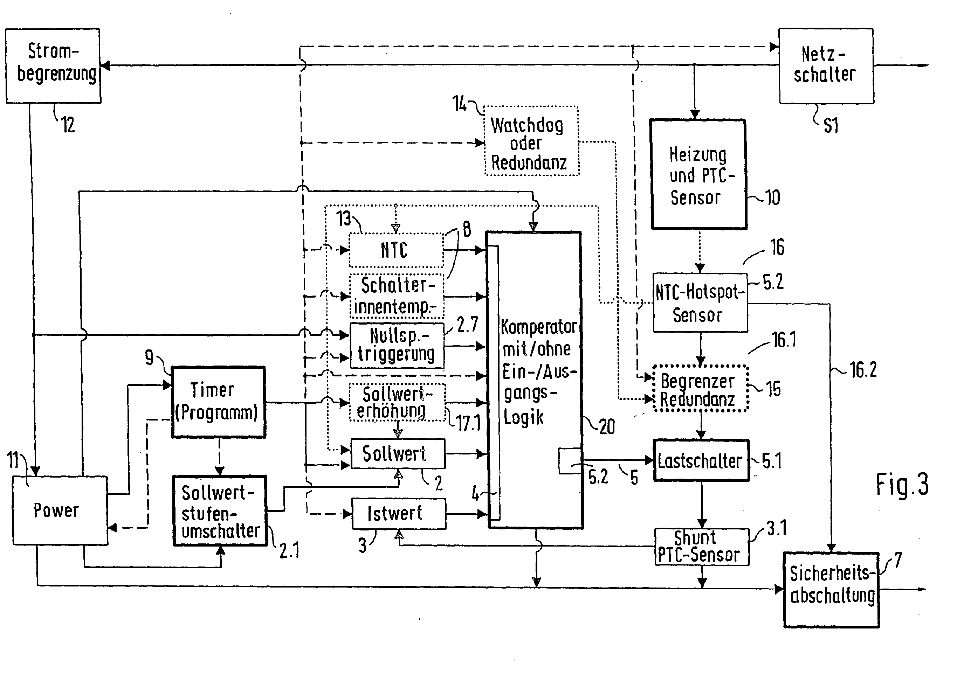

Zusätzlich zu den mittels der Überwachungsschaltung 8 gebildeten Überwachungssignalen kann über die Überwachungszweigankopplung 17.1 der Sollwert in dem Sollwertzuführpfad 2.8 mit einem in der Zeitgeberschaltung 9 gebildeten weiteren Überwachungszweigsignal beaufschlagt werden, das über eine mit ihrer Anode an die Zeitgeberschaltung 9 und mit ihrer Kathode an den Sollwertzuführpfad 2.8 angeschlossenen weiteren Koppeldiode 9.1 zugeführt wird. Das weitere Überwachungszweigsignal bzw. Zeitsignal kann dazu genutzt werden, einen gewünschten Temperaturverlauf zu bewirken, beispielsweise anfänglich zum schnellen Erreichen einer gewünschten Temperatur den Heizstrom iH zu überhöhen, um ihn nach einigen oder einigen zehn Minuten auf einen sicheren Betriebsstrom für eine längere Heizperiode herabzusetzen. Der Verlauf des Heizstromes iH kann dabei entsprechend dem automatisch von dem Einstellmittel 2.1 erfassten Temperaturbedürfnis des Benutzers angepasst werden, wobei ein zu hoher schädlicher Heizstrom iH mit Sicherheit durch entsprechende Vorgaben in der Zeitgeberschaltung 9 bzw. Programmierung ausgeschlossen wird. Hierzu kann die Zeitgeberschaltung 9 in einer Programmstufe 9.2 entsprechend programmiert sein, wie z.B. aus Fig. 3 hervorgeht, um den Sollwert nach dem Wärmebedarf des Benutzers und gleichzeitig Sicherheitsaspekten zuführen.

Fig. 2 zeigt als noch weitere Komponente einen zwischen Phase und Nullleiter der Netzversorgungsspannung liegenden Netzanschlusskondensator C4, mit dem ebenfalls Spannungsspitzen unterdrückt werden. Bei einem in Fig. 3 gezeigten weiteren Ausführungsbeispiel für die Steuervorrichtung 1 des Heizgerätes sind der Soll-/Istwert-Vergleicher 4 und ein Steuerteil 5.2 der Ansteuerstufe 5 in einer integrierten Steuereinrichtung 20, beispielsweise einem Mikrocontoller oder Mikrorechner ausgebildet. Auch ist denkbar, die Zeitgeberschaltung 9 mit der entsprechenden Programmstufe 9.2 in der integrierten Steuereinrichtung 20 anzuordnen. Vorliegend werden aber die Signale der Überwachungsschaltung 8 mit der Isolationszustandsüberwachungsstufe 13 für die Isolation 10.3 der Heizkordel und der Schalterinnentemperaturüberwachungsstufe, der Sollwerterhöhung über die Überwachungszweigankopplung 17.1 sowie der Sollwert und der Istwert zur Verarbeitung einer Eingangsstufe der integrierten Steuereinrichtung 20 zugeführt, in der auch der Soll-/Istwert-Vergleicher 4 ausgebildet ist. Auch das Signal der Nullspannungstriggerung 2.7 kann der Eingangsstufe der integrierten Steuereinrichtung 20 zur Verarbeitung und Kompensation von EMV-Einflüssen unmittelbar zugeführt werden. Die Sollwerterhöhung kann auch dem Sollwert aufgeschaltet werden. Die Zeitgeberschaltung 9, die eingangsseitig mit der Spannungsversorgung 11 in Verbindung steht, wirkt wie bei dem Ausführungsbeispiel nach Fig. 2 auch hierbei zur Beaufschlagung des Sollwertes, beispielsweise zur Sollwerterhöhung, um einen gewünschten Zeitverlauf der Temperatur zu erzielen und gegebenenfalls nach einer gewissen Zeit den Wärmeteil 10 vollständig abschalten zu können. Nach längerer Abschaltzeit kann dann eine automatische Wiederanschaltung durch entsprechende Programmierung erfolgen. Eine weitere Sicherheitsmaßnahme besteht in einer Begrenzung des Versorgungsstroms mittels eines Strombegrenzers 12. Zudem ist eine weitere Überwachungsstufe 14 in Form einer sogenannten Watchdog-Schaltung oder redundanten Begrenzung oder Abschaltung des Heizstroms iH über einen Begrenzer 15 vorgesehen. Der Istwert wird, wie bei dem vorherigen Ausführungsbeispiel, über einen Messwiderstand 3.1 in dem Steuerzweig des Heizsteuerkreises 16 abgegriffen, wobei die Heizdrähte 10.1, 10.2 mit einem positiven Widerstandstemperaturgang ausgestattet sein können, um dadurch einen PTC-Sensor zu bilden. In dem Heizsteuerkreis 16, und zwar dem Parallelzweig 16.2 ist auch hierbei eine Sicherheitsschaltung 7 angeordnet. Die Wirkungsweise der Komponenten entspricht hierbei im Wesentlichen denen des vorangehenden Ausführungsbeispiels.

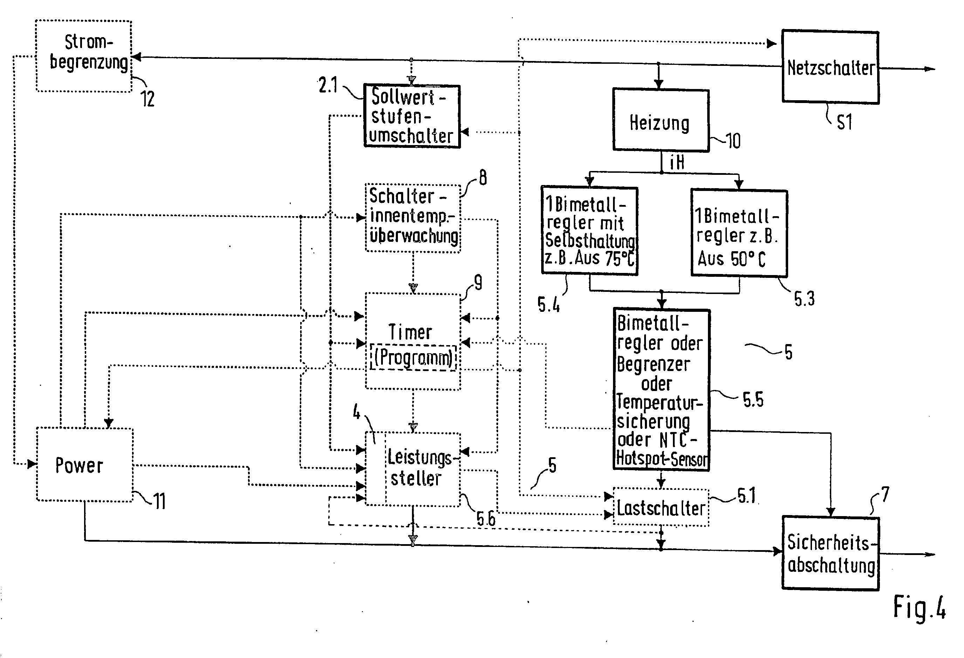

Fig. 4 zeigt ein weiteres Ausführungsbeispiel der Steuervorrichtung des Heizgerätes. Entsprechende Komponenten wie bei den vorangegangenen Ausführungsbeispielen sind mit entsprechenden Bezugszeichen bezeichnet. Eine Besonderheit liegt hierbei in dem Aufbau des Heizsteuerkreises, in dem Komponenten der Ansteuerstufe 5 integriert sind. Durch die Heizkordel des Wärmeteils 10 wird die Heizung gebildet. Der Heizstrom iH zweigt auf über einen Reglerteil in Form eines ersten Bimetallreglers 5.3 und einen weiteren Reglerteil in Form eines zweiten Bimetallreglers 5.4 und wird anschließend wieder zusammengeführt und über einen dritten Reglerteil in Form eines dritten Bimetallreglers 5.5 oder Begrenzers oder einer Temperatursicherung oder einer in der oben beschriebenen Weise funktionierenden NTC-Überwachungsschaltung der Heizkordel geleitet und anschließend über das Steuerglied 5.1 in Form eines Lastschalters reguliert. Anfänglich fließt der Heizstrom iH über den ersten und den zweiten Bimetallregler 5.3, 5.4, bis der erste Bimetallregler feststellt, dass eine Temperaturschwelle von z.B. 50° C überschritten wird und unterbricht. Der Heizstrom iH fließt anschließend nur noch über den zweiten Bimetallregler 5.4 weiter, bis eine Heiztemperatur von z.B. 75° C erreicht ist und auch dieser abschaltet. Der zweite Bimetallregler 5.4 ist mit einer Selbsthaltung ausgestattet und bleibt anschließend ausgeschaltet, wenn die Temperatur mangels eines Heizstromes abfällt. Unterschreitet die Temperatur den Wert von 50° C, schaltet der erste Bimetallregler 5.3 wieder ein, so dass auf diese Temperatur geregelt wird. Der Temperaturverlauf kann dabei über die Ansteuerstufe 5 in der vorstehend beschriebenen Weise über den Soll-/Istwert-Vergleicher 4 und einen anschließenden Leistungssteller der Ansteuerstufe 5 zusätzlich geregelt werden. Mittels der Zeitgeberschaltung 9 kann auch auf die elektrische Energieversorgung 11 eingewirkt werden, wodurch dann die Versorgung der an diese angeschlossenen Komponenten unterbunden wird, um eine vollständige Sicherheitsabschaltung zu erreichen.

## Patentansprüche

1. Heizgerät mit einem schmiegsamen Wärmeteil (10) und einer Steuervorrichtung (1) für die Temperaturregulierung und Funktionsüberwachung, die eine Sollwertbereitstellungsschaltung (2, 2.8), eine Istwertrückführschaltung (3), einen Soll-/Istwertvergleicher (4) und eine Ansteuerstufe (5) mit einem in einem Heizsteuerkreis (16) liegenden Steuerglied (5.1) für einen durch den Wärmeteil (10) fließenden Heizstrom (iH) aufweist,
**dadurch gekennzeichnet,**
**dass** ein zu der Sollwertbereitstellungsschaltung (2, 2.8) führender Überwachungszweig (17) zum Bilden von Überwachungszweigsignalen vorhanden ist, wobei die Überwachungszweigsignale über eine Überwachungszweigankopplung (17.1) der Sollwertbereitstellungsschaltung (2, 2.8) zugeführt werden zur Überlagerung von dieser gebildeter primärer Sollwertsignale und Bildung von an den Soll-/Istwertvergleicher geleiteten Sollwertsignalen.

2. Heizgerät nach Anspruch 1,
**dadurch gekennzeichnet,**
**dass** die Sollwertbereitstellungsschaltung eine Sollwertbildungsstufe (2) und einen Sollwertzuführpfad (2.8) aufweist und
**dass** die Überwachungszweigankopplung (17.1) an den Sollwertzuführpfad (2.8) angeschlossen ist.

3. Heizgerät nach Anspruch 1 oder 2,
**dadurch gekennzeichnet,**
**dass** der Überwachungszweig (17) zur Bildung der Überwachungszweigsignale eine Überwachungsschaltung (8) und/oder eine Zeitgeberschaltung (9) aufweist.

4. Heizgerät nach Anspruch 3,
**dadurch gekennzeichnet,**
**dass** die Ausgänge der Überwachungsschaltung (8) und der Zeitgeberschaltung (9) mittels zugeordneter Entkopplungselemente (8.1, 9.1) voneinander entkoppelt sind und
**dass** zwischen einer Anschlussstelle der Überwachungszweigankopplung (17.1) an den Sollwertzuführpfad (2.8) und der Sollwertbereitstellungsschaltung ein weiteres Entkopplungselement (2.2) zwischengeschaltet ist.

5. Heizgerät nach Anspruch 3 oder 4,
**dadurch gekennzeichnet,**
**dass** die Überwachungsschaltung (8) eine Überwachungseinheit (R8.1, R8.2, K8) zur Überwachung der Innentemperatur eines in einer Versorgungsleitung des Wärmeteils (10) liegenden Schnurzwischenschalters oder eine Isolationszustandsüberwachungseinheit (10.3, 10.4, D7.1, D7.2, R7.1, R17.4, R8.1, R8.2, K8) für eine zwischen zwei Heizleitern (10.1, 10.2) des Wärmeteils (10) befindliche Isolation oder eine Kombination aus beiden aufweist.

6. Heizgerät nach einem der Ansprüche 2 bis 5,
**dadurch gekennzeichnet,**
**dass** die Sollwertbildungsstufe (2) Einstellmittel (2.1) zur manuellen Sollwertwahl aufweist.

7. Heizgerät nach einem der vorhergehenden Ansprüche,
**dadurch gekennzeichnet,**
**dass** der Istwert mittels eines in dem Heizsteuerkreis (16) liegenden Messglieds (R7) abgegriffen ist und
**dass** die Istwertrückführschaltung (3) zur Istwertaufbereitung einen Verstärker (V1) aufweist.

8. Heizgerät nach Anspruch 7,
**dadurch gekennzeichnet,**
**dass** an der Ansteuerstufe (5) zwischen einem Ausgang des Soll-/Istwert-Vergleichers (4) und dem Steuerglied (5.1) eine Impulsgeneratorschaltung (6) angeschlossen ist, deren Ausgangssignal einem Eingang des Soll-/Istwert-Vergleichers (4) zum Retriggern eines Messzyklus nach Abschalten des Steuergliedes (5.1) zugeführt ist.

9. Heizgerät nach Anspruch 8,
**dadurch gekennzeichnet,**
**dass** das Ausgangssignal der Impulsgeneratorschaltung (6) dem an den Soll-/Istwert-Vergleicher (4) geführten Istwert aufgeschaltet ist und
**dass** ein mit dem Anschluss der Impulsgeneratorschaltung (6) an der Ansteuerstufe (5) abgegriffenes Signal über ein Triggerelement (R2.7) der Sollwertbildungsstufe (2) zum Beaufschlagen des Sollwertes zugeführt ist.

10. Heizgerät nach einem der Ansprüche 5 bis 9,
**dadurch gekennzeichnet,**
**dass** die Isolation (10,3) einen Widerstand mit negativem Temperaturgang aufweist und
**dass** die Isolationsüberwachungseinheit (10.3, 10.4, D7.1, D7.2, R7.1, R17.4, R8.1, R8.2, K8) im Heizsteuerkreis (16) an einem Parallelzweig angeschlossen ist, der zu einem das Steuerglied (5.1) aufweisenden Steuerzweig (16.1) parallel geschaltet ist.

11. Heizgerät nach Anspruch 10,
**dadurch gekennzeichnet,**
**dass** die durch die Isolation (10,3) elektrisch voneinander getrennten, als Heizdrähte ausgebildeten Heizleiter (10.1, 10.2) an ihrem von einem Versorgungsanschluss (E, F) abgekehrten Ende über eine Gleichrichterschaltung (10.4) miteinander verbunden sind und
**dass** der Parallelzweig (16.2) mindestens einen Sicherheitsschaltungs-Gleichrichter (D7.1, D7.2) aufweist, der bezüglich der Gleichrichterschaltung (10.4) in Reihe liegt und in Sperrrichtung zu dieser geschaltet ist.

12. Heizgerät nach Anspruch 11,
**dadurch gekennzeichnet,**
**dass** der Parallelzweig (16.2) eine Temperatursicherung (TS) und mindestens einen mit dieser thermisch gekoppelten Sicherheitsschaltungswiderstand (R7.1, R7.2) aufweist, der bei einem durch die Isolation (10.3) fließenden übermäßigen Strom, insbesondere Kurzschlussstrom, aufgeheizt wird und die Temperatursicherung (TS) auslöst.

## Claims

1. Heating appliance having a flexible heating part (10) and a control apparatus (1) for regulating the temperature and monitoring the operation, which control apparatus includes a desired value preparation circuit (2, 2.8), an actual value return circuit (3), a desired value/actual value comparator (4) and an actuation stage (5) with a control member (5.1), situated in a heating control circuit (16), for a heating current (iH) flowing through the heating part (10), **characterised in that** a monitoring branch (17), leading to the desired value preparation circuit (2, 2.8), is provided for producing monitoring branch signals, the monitoring branch signals being supplied via a monitoring branch coupling (17.1) to the desired value preparation circuit (2, 2.8) for the superimposition of said produced primary desired value signals and for the production of desired value signals conducted to the desired value/actual value comparator.

2. Heating appliance according to claim 1, **characterised in that** the desired value preparation circuit includes a desired value production stage (2) and a desired value supply path (2.8), and **in that** the monitoring branch coupling (17.1) is connected to the desired value supply path (2.8).

3. Heating appliance according to claim 1 or 2, **characterised in that** the monitoring branch (17) for producing the monitoring branch signals includes a monitoring circuit (8) and/or a timer circuit (9).

4. Heating appliance according to claim 3, **characterised in that** the outputs of the monitoring circuit (8) and of the timer circuit (9) are decoupled from each other by means of associated decoupling elements (8.1, 9.1), and **in that** an additional decoupling element (2.2) is interposed between a connection point for the monitoring branch coupling (17.1) to the desired value supply path (2.8) and the desired value preparation circuit.

5. Heating appliance according to claim 3 or 4, **characterised in that** the monitoring circuit (8) includes a monitoring unit (R8.1, R8.2, K8) for monitoring the internal temperature of a pendant switch situated in a supply line of the heating part (10), or includes an insulation state monitoring unit (10.3, 10.4, D7.1, D7.2, R7.1, R17.4, R8.1, R8.2, K8) for an insulation situated between two heating conductors (10.1, 10.2) of the heating part (10), or includes a combination of the two units.

6. Heating appliance according to one of claims 2 to 5, **characterised in that** the desired value production stage (2) includes preparation means (2.1) for manually selecting the desired value.

7. Heating appliance according to one of the preceding claims, **characterised in that** the actual value is picked-up by means of a measuring member (R7) situated in the heating control circuit (16), and **in that** the actual value return circuit (3) for processing the actual value includes an amplifier (V1).

8. Heating appliance according to claim 7, **characterised in that** an impulse generator circuit (6) is connected to the actuation stage (5) between an output of the desired value/actual value comparator (4) and the control member (5.1), the output signal of said impulse generator circuit being supplied to an input of the desired value/actual value comparator (4) to re-trigger a measuring cycle after the control member (5) is switched-off.

9. Heating appliance according to claim 8, **characterised in that** the output signal of the impulse generator circuit (6) is superimposed onto the actual value supplied to the desired value/actual value comparator (4), and **in that** a signal, picked-up with the connection of the impulse generator circuit (6) to the actuation stage (5), is supplied via a trigger element (R2.7) to the desired value production stage (2) to actuate the desired value.

10. Heating appliance according to one of claims 5 to 9, **characterised in that** the insulation (10.3) includes a resistor with a negative temperature path, and **in that** the insulation monitoring unit (10.3, 10.4, D7.1, D7.2, R7.1, R17.4, R8.1, R8.2, K8) in the heating control circuit (16) is connected to a parallel branch, which is connected in parallel to a control branch (16.1) including the control member (5.1).

11. Heating appliance according to claim 10, **characterised in that** the heating conductors (10.1, 10.2), which are in the form of heating wires and are electrically separated from each other by the insulation (10.3), are interconnected, at their end remote from a supply connection (E, F), via a rectifier circuit (10.4), and **in that** the parallel branch (16.2) includes at least one safety circuit rectifier (D7.1, D7.2), which lies in series relative to the rectifier circuit (10.4) and is switched in the blocking direction relative thereto.

12. Heating appliance according to claim 11, **characterised in that** the parallel branch (16.2) includes a temperature safety means (TS) and at least one safety circuit resistor (R7.1, R7.2), which is thermally connected to said safety means, which resistor is heated-up in the event of an excess current, more especially a short-circuit current, flowing through the insulation (10.3), and triggers the temperature safety means (TS).

## Revendications

1. Appareil de chauffage avec une partie chauffante souple (10) et un dispositif de commande (1) pour la régulation de température et la surveillance de fonctionnement, qui présente un circuit de fourniture de valeur de consigne (2, 2.8), un circuit de retour de valeur réelle (3), un comparateur valeur de consigne/valeur réelle (4) et un étage de commande (5) avec un organe de commande (5.1) situé dans un circuit de commande de chauffage (16) pour un courant de chauffage (iH) circulant à travers la partie chauffante (10),
**caractérisé par le fait,**
**qu'**il existe une branche de surveillance (17) conduisant au circuit de fourniture de valeur de consigne (2, 2.8) pour la formation de signaux de branche de surveillance, les signaux de branche de surveillance étant amenés via un couplage de branche de surveillance (17.1) au circuit de fourniture de valeur consigne (2, 2.8) pour y être superposés aux signaux de valeur de consigne primaires formés par lui et former des signaux de valeur de consigne conduits au comparateur valeur de consigne/valeur réelle.

2. Appareil de chauffage selon la revendication 1,
**caractérisé par le fait,**
**que** le circuit de fourniture de valeur de consigne présente un étage de formation de valeur de consigne (2) et un chemin d'amenée de valeur de consigne (2.8) et
**que** le couplage de branche de surveillance (17.1) est connecté au chemin d'amenée de valeur de consigne (2.8).

3. Appareil de chauffage selon la revendication 1 ou 2,
**caractérisé par le fait**
**que** la branche de surveillance (17) servant à former les signaux de branche de surveillance présente un circuit de surveillance (8) et/ou un circuit d'horloge (9).

4. Appareil de chauffage selon la revendication 3,
**caractérisé par le fait**
**que** les sorties du circuit de surveillance (8) et du circuit d'horloge (9) sont découplées l'une de l'autre au moyen d'éléments de découplage associés (8.1, 9.1) et
**qu'**un autre élément de découplage (2.2) est intercalé entre un point de connexion du couplage de branche de surveillance (17.1) sur le chemin d'amenée de valeur de consigne (2.8) et le circuit de fourniture de valeur de consigne.

5. Appareil de chauffage selon la revendication 3 ou 4,
**caractérisé par le fait**
**que** le circuit de surveillance (8) présente une unité de surveillance (R8.1, R8.2, K8) pour la surveillance de la température intérieure d'un interrupteur intermédiaire à cordon situé dans une ligne d'alimentation de la partie chauffante (10) ou une unité de surveillance de l'état d'isolation (10.3, 10.4, D7.1, D7.2, R7.1, R17.4, R8.1, R8.2, K8) pour une isolation se trouvant entre deux conducteurs chauffants (10.1, 10.2) de la partie chauffante (10) ou une combinaison des deux.

6. Appareil de chauffage selon l'une des revendications 2 à 5,
**caractérisés par le fait**
**que** l'étage de formation de valeur de consigne (2) présente des moyens de réglage (2.1) pour le choix manuel de la valeur de consigne.

7. Appareil de chauffage selon l'une des revendications précédentes,
**caractérisé par le fait**
**que** la valeur réelle est prélevée au moyen d'un organe de mesure (R7) situé dans le circuit de commande de chauffage (16) et
**que** le circuit de retour de valeur réelle (3) présente un amplificateur (V1) pour la mise en forme de la valeur réelle.

8. Appareil de chauffage selon la revendication 7,
**caractérisé par le fait**
**qu'**un circuit générateur d'impulsions (6), dont le signal de sortie est amené à une entrée du comparateur valeur de consigne/valeur réelle (4) pour redéclencher un cycle de mesure après la coupure de l'organe de commande (5.1), est connecté à l'étage de commande (5) entre une sortie du comparateur valeur de consigne/valeur réelle (4) et l'organe de commande (5.1).

9. Appareil de chauffage selon la revendication 8,
**caractérisé par le fait**
**que** le signal de sortie du circuit générateur d'impulsions (6) est appliqué à la valeur réelle amenée au comparateur valeur de consigne/valeur réelle (4) et
**qu'**un signal prélevé par la connexion du circuit générateur d'impulsions (6) à l'étage de commande (5) est amené via un élément de déclenchement (R2.7) à l'étage de formation de valeur de consigne (2) pour y être appliqué à la valeur de consigne.

10. Appareil de chauffage selon l'une des revendications 5 à 9,
**caractérisé par le fait**
**que** l'isolation (10.3) présente une résistance à réponse en température négative et
**que** l'unité de surveillance d'isolation (10.3, 10.4, D7.1, D7.2, R7.1, R17.4, R8.1, R8.2, K8) est connectée dans le circuit de commande de chauffage (16) à une branche parallèle qui est connectée en parallèle sur une branche de commande (16.1) présentant l'organe de commande.

11. Appareil de chauffage selon la revendication 10,
**caractérisé par le fait**
**que** les conducteurs chauffants (10.1, 10.2) réalisés sous la forme de fils chauffants, isolés électriquement l'un de l'autre, sont reliés ensemble via un circuit redresseur (10.4) à leur extrémité éloignée d'une connexion d'alimentation (E, F) et
**que** la branche parallèle (16.2) présente au moins un redresseur de circuit de sécurité (D7.1, D7.2) qui est en série avec le circuit redresseur (10.4) et est connecté en sens inverse par rapport à celui-ci.

12. Appareil de chauffage selon la revendication 11,
**caractérisé par le fait**
**que** la branche parallèle (16.2) présente un fusible thermique (TS) et au moins une résistance de circuit de sécurité (R7.1, R7.2) couplée thermiquement à celui-ci qui, en cas de courant excessif circulant à travers l'isolation (10.3), en particulier en cas de courant de court-circuit, s'échauffe et déclenche le fusible thermique (TS).
